# EUROPEAN PATENT APPLICATION

(11) **EP 2 395 199 A2**
(43) Date of publication of application: **14.12.2011**
(21) Application number: 11169477.4
(22) Date of filing: 10.06.2011
(51) Int. Cl.: F01D 5/00

(54) **Method for repairing gas turbine blades and a gas turbine blade**

(30) Priority: 14.06.2010 JP 2010135429
(71) Applicant: Kabushiki Kaisha Toshiba, Tokyo 105-8001 (JP)
(72) Inventor: Ito, Shoko, Tokyo, 105-8001 (JP); Hino, Takehisa, Tokyo, 105-8001 (JP); Sakai, Yoshiaki, Tokyo, 105-8001 (JP)
(74) Representative: HOFFMANN EITLE

(57) **Abstract**

A method for repairing gas turbine blades includes: a thickness-reduced portion removing step S101 of working a surface of a blade tip 10a into a flat surface 13 by removing a thickness-reduced portion 12 of the blade tip 10a; a build-up welding step S 102 of forming a built-up portion 14 with a predetermined thickness by melting powder of a build-up material higher in ductility than a base material forming the gas turbine blade 10 by a laser beam and building up the melted powder in multiple layers on the blade tip 10a whose surface is worked into the flat surface 13; a forming step S103 of working the built-up portion 14 into the same shape as a shape that the blade tip 10a originally has before suffering a thickness loss; and a beat-treatment step 104 of removing a residual strain caused by laser welding in the build-up welding step S102.

## Description

### FIELD

Embodiments described herein relate generally to a method for repairing gas turbine blades and a gas turbine blade repaired by the repairing method.

### BACKGROUND

Gas turbine blades are exposed to high-temperature gas at 1000°C or higher discharged from a combustor. Therefore, they need cooling in order to have an effective design life cycle. Generally, in order to cool the gas turbine blades, part of compressed air extracted from a compressor is supplied from lower ends of dovetail of the gas turbine blades. The cooling air supplied into the gas turbine blades passes through cooling channels formed in airfoil parts of the gas turbine blades to be released out of the blades.

For the purpose of reducing an amount of the used cooling air as much as possible, a Ni-base superalloy or the like is used to form the gas turbine blades, and the gas turbine blades are used in an environment whose temperature is 800°C or higher. In particular, a first-stage rotor blade is exposed to combustion gas whose temperature is highest, and therefore, an advanced cooling design method is adopted for this blade. However, at a blade tip of the gas turbine blade, it is structurally difficult to strengthen the cooling and the temperature of this portion becomes higher than that of other portions of the gas turbine blade.

Corrosion-resistant coating and thermal-barrier coating are applied on blade surfaces of the gas turbine blades. On the other hand, on surfaces of blade tips of the gas turbine blades facing a casing, the above coatings are not applied because the blade tips sometimes come into contact with an inner surface of the casing during the operation and the coatings, even if applied on the surfaces of the blade tips, are exfoliated. Accordingly, at the blade tips of the gas turbine blades, a thickness loss progresses due to oxidation by the combustion gas and erosion by the combustion gas passing through the gas turbine blades.

The occurrence of the thickness loss increases gaps between the blade tips of the gas turbine blades and the inner surface of the casing, resulting in deterioration in gas turbine performance. If the thickness loss at the blade tips of the gas turbine blades progresses, thickness-reduced portions reach the cooling channels and the cooling air flows out. This breaks a flow rate balance of the cooling air in the gas turbine blades to cause a metal temperature increase and a damage of the gas turbine blades.

The gas turbine blades suffer the thickness loss as described above, and hence are repaired after used for a predetermined period so that their original shapes are recovered. In the repairing, surfaces of the thickness-reduced portions are worked into flat surfaces, and build-up welding is performed on the flat surfaces, followed by finish machining.

Being made of a heat-resistant alloy such as the Ni-base superalloy, the gas turbine blades are excellent in high-temperature strength but have a problem of easily suffering a defect at welding portions due to their poor weldability. Further, when the build-up welding using a welding wire such as TIG welding is adopted for repairing the gas turbine blades, heat input at the time of the welding is relatively large, which is likely to cause a defect such as solidification cracking.

### BRIEF DESCRIPTION OF THE DRAWINGS

FIG. 1 is a perspective view showing a gas turbine blade suffering a thickness loss at its blade tip.

FIG. 2 is a cross-sectional view showing the blade tip of the gas turbine blade taken along A-A line in FIG. 1.

FIG. 3 is a chart showing steps of a method for repairing gas turbine blades of a first embodiment.

FIG. 4 is a cross-sectional view taken along A-A line in FIG. 1, illustrating the step of the method for repairing gas turbine blades of the first embodiment.

FIG. 5 is a cross-sectional view taken along A-A line in FIG. 1, illustrating the step of the method for repairing gas turbine blades of the first embodiment.

FIG. 6 is a view illustrating a laser welding method.

FIG. 7 is a cross-sectional view taken along A-A line in FIG. 1, illustrating the step of the method for repairing gas turbine blades of fhe first embodiment.

FIG. 8 is a cross-sectional view taken along A-A line in FIG. 1, illustrating the step of the method for repairing gas turbine blades of the first embodiment.

FIG. 9 is a chart showing steps of a method for repairing gas turbine blades of a second embodiment.

FIG. 10 is a cross-sectional view taken along A-A line in FIG. 1, illustrating the step of the method for repairing gas turbine blades of the second embodiment.

FIG. 11 is a cross-sectional view taken along A-A line in. FIG. 1, illustrating the step of the method for repairing gas turbine blades of the second embodiment.

FIG. 12 is a cross-sectional view taken along A-A line in FIG. 1, illustrating the step of the method for repairing gas turbine blades of the second embodiment.

FIG. 13 is a cross-sectional view taken along A-A line in FIG. 1, illustrating the step of the method for repairing gas turbine blades of the second embodiment.

### DETAILED DESCRIPTION

In one embodiment, a method for repairing gas turbine blades which repairs a thickness-reduced portion of a blade tip of a gas turbine blade includes: a thickness-reduced portion removing step of working a surface of the blade tip into a flat surface by removing the thickness-reduced portion of the blade tip; a build-up welding step of forming a built-up portion with a predetermined thickness by melting powder of a build-up material higher in ductility than a base material forming the gas turbine blade by a laser beam and building up the melted powder in multiple layers on the blade tip whose surface is worked into the flat surface; a forming step of working the built-up portion into the same shape as a shape that the blade tip originally has before suffering a thickness loss; and a heat-treatment step of removing a residual strain caused by laser welding in the build-up welding step.

Hereinafter, embodiments of the present invention will be described with reference to the drawings.

### (First Embodiment)

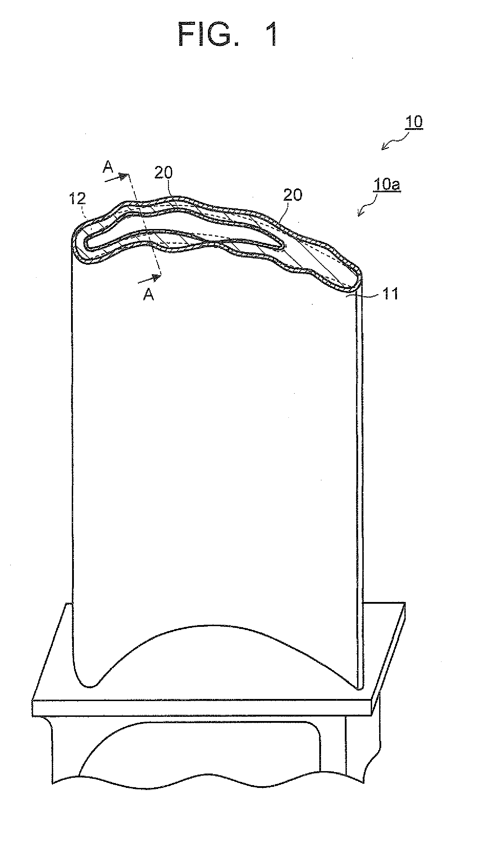

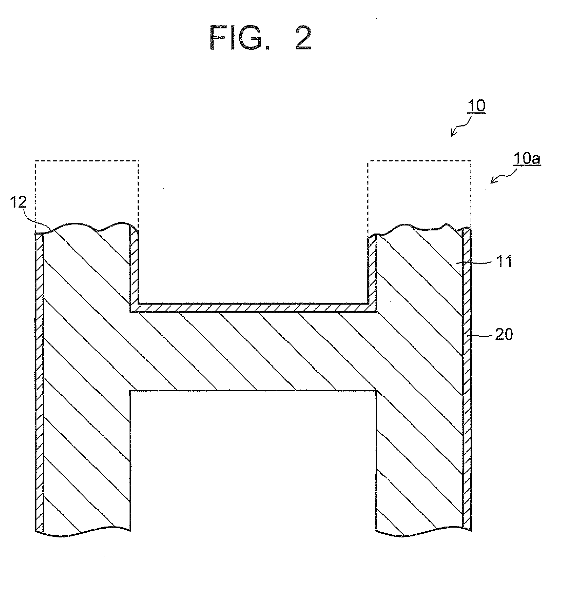

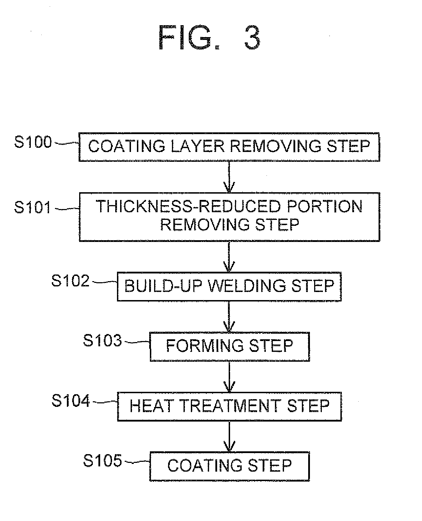

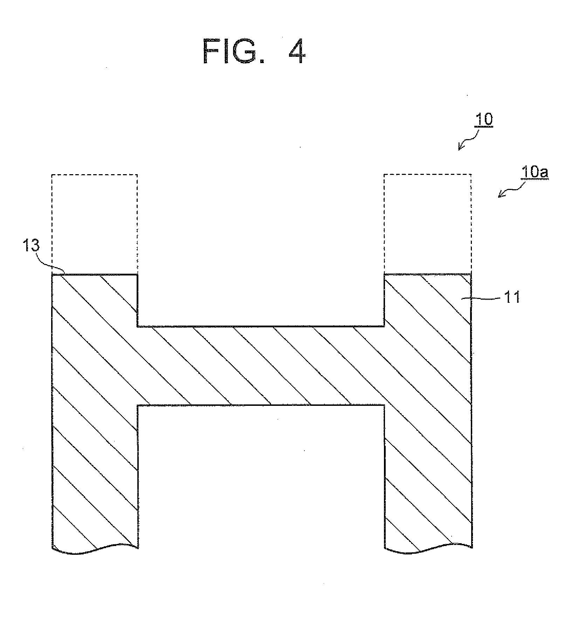

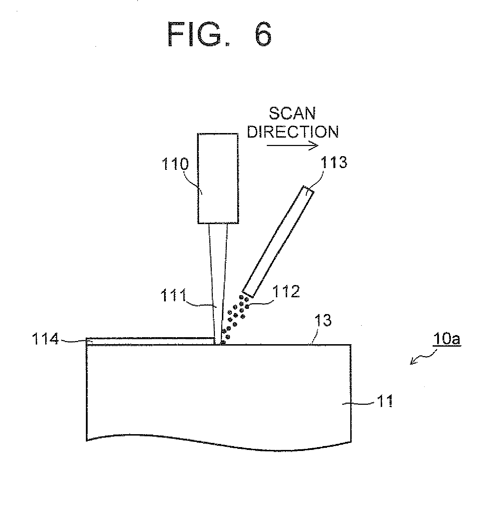

FIG. 1 is a perspective view showing a gas turbine blade 10 suffering a thickness loss at its blade tip 10a. Fig. 2 is a cross-sectional view showing the blade tip 10a of the gas turbine blade 10 taken along A-A line in Fig. 1. FIG. 3 is a chart showing steps of a method for repairing gas turbine blades of a first embodiment. FIG. 4, FIG. 5, FIG. 7, and FIG. 8 are cross-sectional views taken along A-A line in FIG. 1, illustrating the steps of the method for repairing gas turbine blades of the first embodiment. FIG. 6 is a view illustrating a laser welding method. Note that, in FIG. 1, FIG. 2, FIG. 4, and FIG. 5, a thickness-reduced portion is shown by the broken line.

In the description of the method for repairing gas turbine blades of the first embodiment, the gas turbine blade 10 whose blade tip 10a includes a squealer part 11 is taken as an example, but the method for repairing gas turbine blades of the first embodiment is also applicable to a gas turbine blade with any other structure.

As shown in FIG. 1 and FIG. 2, the blade tip 10a of the gas turbine blade 10 suffers a thickness loss and comes to have a rugged surface shape due to oxidation by combustion gas or erosion by the combustion gas passing through the gas turbine blade 10. When the blade tip 10a of the gas turbine blade 10 thus suffers the thickness loss, it is subjected to processes of the respective steps shown in FIG. 3 for repairing.

A concrete repairing method will be described.

If a coating layer 20 is formed on a blade surface of the gas turbine blade 10 suffering the thickness loss at the blade tip 10a as shown in FIG. 2, the coating layer 20 is removed (coating layer removing step S100).

Examples of the coating layer 20 are a corrosion-resistant coating layer, a thermal-barrier layer, and the like. Such a coating layer 20 is removed by, for example, blasting, chemical treatment using a chemical such as a hot acidic solution, or the like. Incidentally, when the coating layer 20 is not formed on the blade surface of the gas turbine blade 10, the coating layer removing step S100 is not necessary.

Subsequently, as shown in FIG. 4, a thickness-reduced portion 12 of the blade tip 10a is removed by a polisher such as a grinder, whereby a surface of the blade tip 10a is worked into a flat surface 13 (thickness-reduced portion removing step S101).

Here, the surface of the blade tip 10a is preferably worked so that the flat surface 13 becomes parallel to an end surface that the blade tip 10a originally has before suffering the thickness loss, as shown in FIG. 4.

Subsequently, powder for more excellent in weldability than a base material forming the gas turbine blade 10 is melted by a laser beam and the melted powder is built up in multiple layers on the blade tip 10a whose surface is worked into the flat surface 13, whereby a built-up portion 14 with a predetermined thickness is formed (build-up welding step S102).

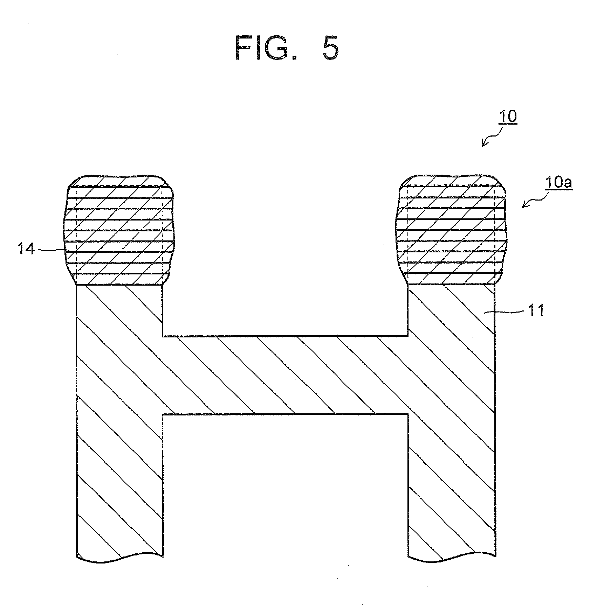

In this build-up welding, for example, while a laser torch of a laser welding device is scanned in a camber line direction (direction perpendicular to the paper in FIG. 5) of the gas turbine blade 10 along the flat surface 13 of the blade tip 10a, weld beads are built up in multiple layers to form the built-up portion 14. Incidentally, in forming the built-up portion 14 by building up the weld beads in multiple layers, the laser torch may be scanned in a direction perpendicular to the camber line of the gas turbine blade 10 (left and right direction in FIG. 5).

As shown in FIG. 5, the built-up portion 14 is formed so as to protrude in a height direction and a circumferential direction (toward a pressure side and a suction side) of the gas turbine blade 10 from the shape that the blade tip 10a originally has before suffering the thickness loss (portion shown by the broken line in FIG. 5). Note that these projections are removed in a later forming step.

The gas turbine blade 10 is made of a Ni-base superalloy such as, for example, IN738 (registered trademark) or GTD11 (registered trademark). The build-up material forming the built-up portion 14 is preferably a Ni-base superalloy higher in ductility than the Ni-base superalloy forming the gas turbine blade 10. The use of the Ni-base superalloy higher in ductility than the Ni-base superalloy forming the gas turbine blade 10 contributes to improvement in weldability.

As the Ni-base superalloy having high ductility, usable is a Ni-base superalloy whose Al content is less than that of the Ni-base superalloy forming the gas turbine blade 10. IN738 and GTD 111 each used as the Ni-base superalloy forming the gas turbine blade 10 contain 3.4 mass% Al and 3 mass% Al respectively, and the Ni-base superalloy forming the gas turbine blade 10 generally contains 2.5 mass% to 5.9 mass% Al. Therefore, an Al content ratio in the Ni-base superalloy forming the build-up material is preferably about 0 mass% to about 2 mass% which is lower than the Al content ratio of the Ni-base superalloy forming the gas turbine blade 10. When the Al content ratio is over 2 mass%, ductility lowers. Concretely, as the build-up material forming the built-up portion 14, usable is, for example, IN625 (registered trademark) whose Al content ratio is 0.13 mass%, IN600 (registered trademark) whose Al content ratio is 0.24 mass%, or the like.

This build-up material is supplied to the laser torch of the laser welding device in a powder state. A particle size of the powder is preferably 25 µm to 150 µm. When the particle size of the powder is less than 25 µm, it is difficult to transport the powder in devices for supplying the powder, including a powder supply device 113 (to be described later), and when the particle size is over 150 µm, the powder does not completely melt. The particle size mentioned here is decided according to classification with the use of a sieve having apertures with a predetermined size, and it is possible to confirm and measure that the particle size falls within the aforesaid particle size range, by using, for example, a scan-type electronic microscope or the like.

Here, the laser welding for forming the built-up portion 14 will be described with reference to FIG. 6.

FIG. 6 shows an example where the built-up portion 14 is formed by building up the beads in multiple layers while the laser torch 110 of the laser welding device is scanned in the camber line direction (left and right direction in FIG. 6) of the gas turbine blade 10 along the flat surface 13 of the blade tip 10a. Further, FIG. 6 shows a state when the blade tip 10a on which the built-up portion 14 is to be formed is seen from the dorsal side of the gas turbine blade 10.

As shown in FIG. 6, while a laser beam 111 emitted from the laser torch 110 is scanned in the camber line direction of the gas turbine blade 10 along the flat surface 13 of the blade tip 10a, the powder 112 of the build-up material is supplied from the powder supply device 113 to an area in front of the laser beam 111. The supplied powder 112 of the build-up material is melted by heat of the laser beam 1 11 and is deposited on the flat surface 13 of the blade tip 10a. The weld beads 114 are stacked for build-up by the repetition of this laser welding, whereby the built-up portion 14 shown in FIG. 5 is formed.

As a laser used for the laser welding, a CO₂ laser, a YAG laser, or the like is usable, for instance. A supply amount of the powder 112 of the build-up material depends on an output of the laser, that is, energy of the laser beam 111, and the larger the output of the laser is, the larger amount of the powder 112 can be supplied for welding. Here, in order to prevent solidification cracking at the time of the welding, it is important to lower the output of the laser as much as possible to reduce heat input at the time of the welding. For this purpose, it is preferable to repeat the build-up welding to stack the weld beads 114 for build-up while the laser beam 111 having a lowest possible energy with which the powder 112 of the build-up material can melt is emitted.

By thus adjusting the output of the laser to emit the laser beam 111 having the smallest possible energy with which the powder 112 of the build-up material can melt, it is possible to reduce the occurrence of a crack on a welding interface due to the accumulation of thermal strains at the time of the welding.

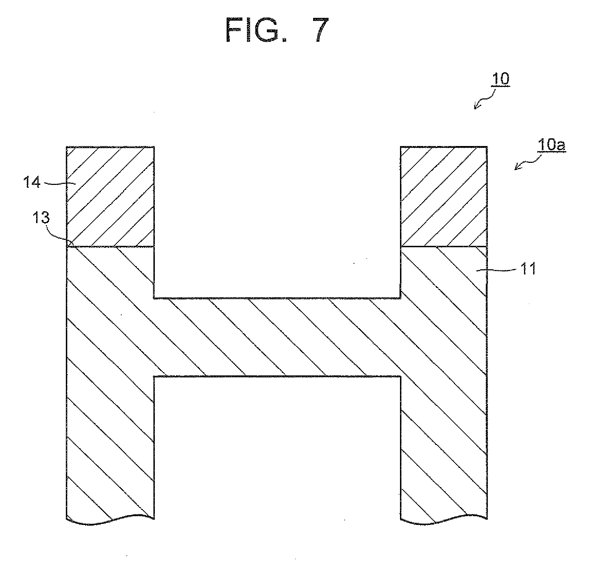

Subsequently, as shown in FIG. 7, the built-up portion 14 built up in the build-up welding step S102 is worked into the same shape as the shape that the blade tip 10a originally has before suffering the thickness loss (forming step S103).

In the forming step S103, portions, of the built-up portion 14, protruding in the height direction and the circumferential direction (toward the pressure side and the suction side) of the gas turbine blade 10 from the shape that the blade tip originally has before suffering the thickness loss (portion shown by the broken line in FIG. 5) are polished. For the polishing, a polisher such as a grinder is used, for example.

The forming step S 103 is followed by heat treatment for removing a residual strain caused by the laser welding in the build-up welding step S102 (heat-treatment step S104).

In the heat-treatment step S 104, by solution treatment in which the gas turbine blade 10 is heated up to a solution treatment temperature in a vacuum, the residual strain is removed.

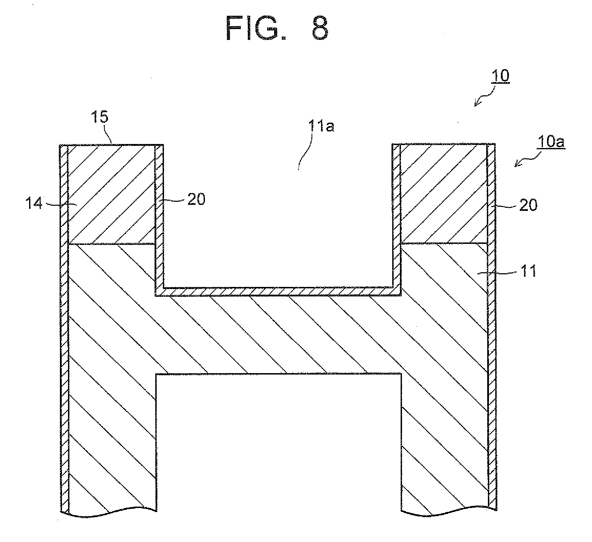

Subsequently, by generally-known coating treatment of the gas turbine blade 10, the coating layer 20 is formed on the blade surface of the gas turbine blade 10 (coating step S105) (see FIG. 8).

Examples of the coating layer 20 are a corrosion-resistant coating layer, a thermal barrier coating layer, and the like. For example, the coating layer 20 is formed by electron beam physical vapor deposition (EB-PVD), low-pressure plasma spraying (LPPS), or the like. FIG. 8 shows an example where the coating layer 20 is formed on the pressure side and the suction side of the gas turbine blade 10 and on a surface of an indented portion 11a of the squealer part 11, but the coating layer 20 may be formed so as to cover an end surface 15 of the built-up portion 14. Incidentally, when the coating layer 20 is not formed on the blade surface of the gas turbine blade 10, the coating step S105 is not necessary.

The coating treatment is followed by aging treatment. Incidentally, the above-described heat-treatment step S104 may come after the coating treatment.

Through the above-described repairing processes, the gas turbine blade 10 whose thickness loss at the blade tip 10a is repaired is obtained.

As described above, according to the method for repairing gas turbine blades of the first embodiment, in the build-up welding step S102, the built-up portion is formed by the local heat input by adopting the laser welding, so that the heat input to the blade tip 10a is reduced, which can reduce an influence by the thermal strain. Further, the Ni-base superalloy which is powdery and thus is easy to melt and which is higher in ductility than the Ni-base superalloy forming the gas turbine blade 10 is used as the build-up material, which can improve weldability and prevent the occurrence of a defect at the time of the welding.

Further, before the build-up welding step S102, the surface of the blade tip 10a is worked into the flat surface 13 in the thickness-reduced portion removing step S101, which makes it possible to stably and uniformly supply the powder of the build-up material to the entire welding portion. This makes it possible to ensure a stable welding state in the build-up welding step S102.

### (Second Embodiment)

A method for repairing gas turbine blades of a second embodiment is different from the method for repairing gas turbine blades of the first embodiment in that the build-up welding step includes a first build-up welding step and a second build-up welding step, and the other steps of the repairing method are the same. Therefore, the build-up welding step will be mainly described here.

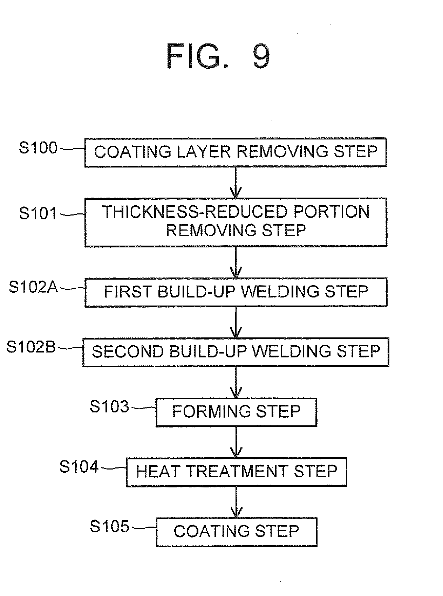

FIG. 9 is a chart showing the steps of the method for repairing gas turbine blades of the second embodiment. Note that the same steps as those of the method for repairing gas turbine blades of the first embodiment will be denoted by the same reference symbols, and redundant description thereof will be omitted or simplified. Further, as in the method for repairing gas turbine blades of the first embodiment, the coating layer removing step S100 and the coating step S105 are not necessary when the gas turbine blade 10 not having the coating layer 20 on the blade surface is to be repaired.

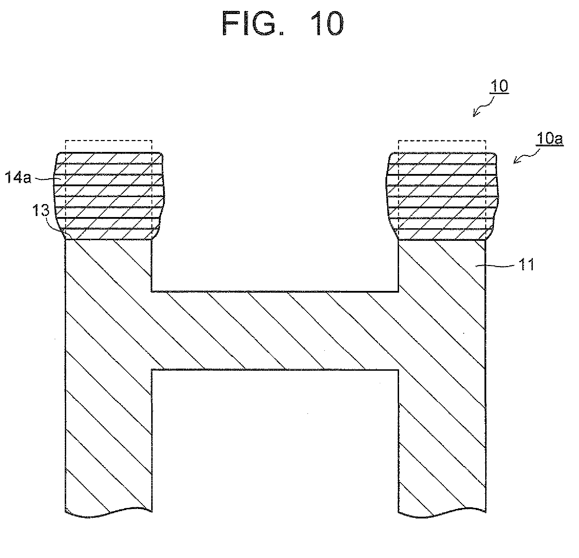

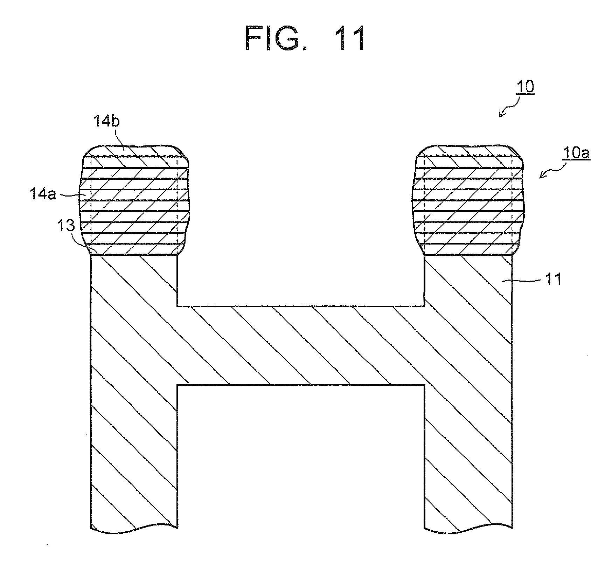

FIG. 10 to FIG. 13 are cross-sectional views taken along A-A line in FIG. 1, illustrating the steps of the method for repairing gas turbine blades of the second embodiment. Note that in FIG. 10 and FIG. 11, the thickness-reduced portion is shown by the broken line.

On the blade tip 10a having undergone the coating layer removing step S100 and the thickness-reduced portion removing step S101 and thus has the flat surface 13 with the thickness-reduced portion 12 being removed as shown in FIG. 4, powder of a first build-up material more excellent in weldability than the base material forming the gas turbine blade 10 is melted by a laser beam and is built up in multiple layers, whereby a first built-up portion 14a with a predetermined thickness is formed (first build-up welding step S102A) (see FIG. 10).

A welding method in the first build-up welding step S102A is the same as the welding method in the build-up welding step S102 of the first embodiment. Further, the first build-up material is the same as the build-up material of the first embodiment.

As shown in FIG. 10, the first built-up portion 14a is formed so as to protrude in the circumferential direction (toward the pressure side and the suction side) of the gas turbine blade 10 from the shape that the blade tip 10a originally has before suffering the thickness loss (portion shown by the broken line in FIG. 10). These projections are removed by the later forming step.

Subsequently, on an end surface of the first built-up portion 14a, powder of a second build-up material more excellent in oxidation resistance than the first build-up material is melted by a laser beam to be built up in multiple layers, whereby a second built-up portion 14b with a predetermined thickness is formed (second build-up welding step S102B) (see FIG. 11).

A welding method in the second build-up welding step S102B is the same as the welding method in the build-up welding step S102 of the first embodiment. As shown in FIG. 11, the second built-up portion 14b is formed so as to protrude in the height direction and the circumferential direction (toward the pressure side and the suction side) of the gas turbine blade 10 from the shape that the blade tip 10a originally has before suffering the thickness loss (portion shown by the broken line in FIG. 11). These projections are removed by the later forming step.

Preferably, the second build-up material is more excellent in oxidation resistance than the first build-up material as described above and has the same degree of oxidation resistance as that of the base material forming the gas turbine blade 10. As the second build-up material, usable is, for example one material selected from the same material as the base material forming the gas turbine blade 10, MCrAlY (CoNCrAlY, NiCoCrAlY, or the like in which M is made up of Co and Ni), and an Al alloy (nickel-aluminum alloy).

A particle size of the powder of the second build-up material is preferably 25 µm to 150 µm. When the particle size of the powder is less than 25 µm, it is difficult to transport the powder in devices for supplying the powder, including the powder supply device 113 and when the particle size is over 150 µm, the powder does not completely melt. The particle size mentioned here is decided according to classification with the use of a sieve having apertures with a predetermined size, and it is possible to confirm and measure that the particle size falls within the aforesaid particle size range, by using, for example, a scan-type electronic microscope or the like.

Here, in general, in the Ni-base superalloy, the following relation holds true. That is, the smaller the Al content, the higher weldability is and the lower oxidation resistance is. On the other hand, the larger the Al content is, the lower weldability is and the higher oxidation resistance is. Therefore, in order to realize favorable welding with the base material forming the gas turbine blade 10 without causing the occurrence of a defect, the first built-up portion 14a is made of a Ni-base superalloy whose Al content is less than that of the Ni-base superalloy forming the gas turbine blade 10. Further, the second built-up portion 14b exposed to combustion gas is made of a Ni-base superalloy whose Al content is larger than that of the first build-up material, whereby oxidation resistance is improved.

At the time of a shift from the first build-up welding step S 102A to the second build-up welding step S102B, changing the powder of the supplied build-up material and changing laser welding conditions (laser power output, irradiation distance, welding speed, and the like) according to the build-up material enables the continuous build-up welding. That is, it is possible to efficiently execute the welding process without changing an installation position of the gas turbine blade 10 or the like.

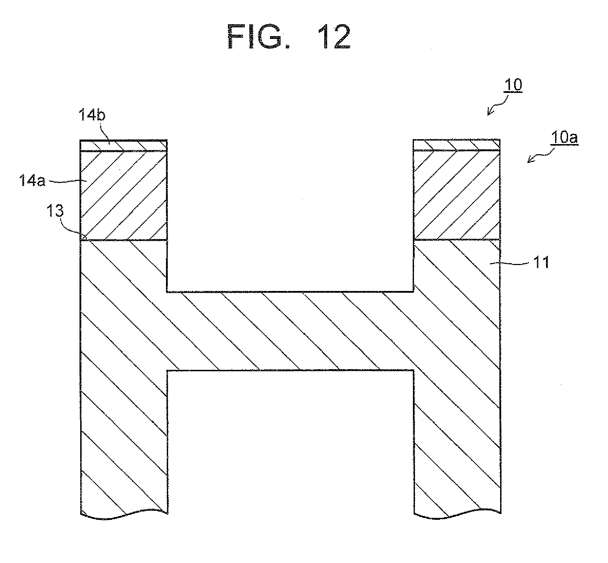

Subsequently, as shown in FIG. 12, the first built-up portion 14a and the second built-up portion 14b which are built up are worked into the shape that the blade tip 10a originally has before suffering the thickness loss (forming step S103).

Here, at the time of forming the second built-up portion 14b, a welding amount of the second build-up material needs to be reduced as much as possible because the second build-up material is poorer in weldability than the first build-up material. Further, the second built-up portion 14b needs to be formed so as to be capable of fully showing the oxidation resistance effect. Therefore, the thickness of the second built-up portion 14b (the thickness in the height direction of the gas turbine blade 10) is preferably 50 µm to 300 µm.

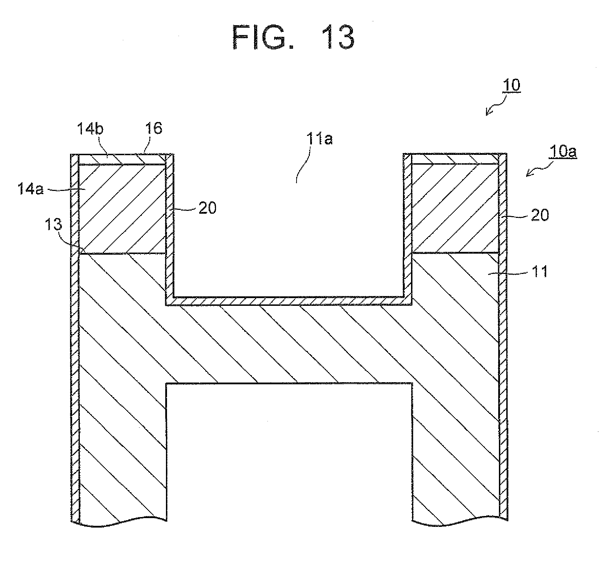

Subsequently, a residual strain is removed in the heat treatment step S104, and the coating layer 20 is formed in the coating step S105, so that the gas turbine blade 10, shown in FIG. 13, whose thickness loss at the blade tip 10a is repaired is obtained.

Incidentally, FIG. 13 shows an example where the coating layer 20 is formed on the pressure side and the suction side of the gas turbine blade 10 and on the surface of the indented portion 11a of the squealer part 11, but the coating layer 20 may be formed so as to cover an end surface 1 of the second built-up portion 14b.

As describe above, according the method for repairing gas turbine blades of the second embodiment, the built-up portions are formed by local heat input by adopting the laser welding in the first build-up welding step S102A and the second build-up welding step S102B, which reduces the heat input to the blade tip 10a to reduce an influence due to the thermal strain.

Further, before the first build-up welding step S102A, the surface of the blade tip 10a is worked into the flat surface 13 in the thickness-reduced portion removing step S 101, which makes it possible to stably and uniformly supply the powder of the build-up material to the entire welding portion. This makes it possible to ensure a stable welding state in the first build-up welding step S102A.

Further, the built-up portion can be made up of the stack of the first built-up portion 14a excellent in weldability and the second built-up portion 14b excellent in oxidation resistance. Specifically, the Ni-base superalloy whose Al content is smaller than that of the Ni-base superalloy forming the gas turbine blade 10 is used to form the first built-up portion 14a on the flat surface 13 of the blade tip 10a, which enables favorable welding with the base material of the gas turbine blade 10. Further, the second build-up material more excellent in oxidation resistance than the first build-up material, is used to form the second built-up portion 14b exposed to the combustion gas, which can improve oxidation resistance.

An amount of the second built-up portion 14b is reduced to a minimum possible amount with which the effect of oxidation resistance can be showed, and further, the constraint by thermal expansion at the time of the welding is small at the blade tip 10a, which can prevent the occurrence of a defect at the time of the welding.

According to the above-described embodiments, at the time of repairing the thickness-reduced portion of the blade tip of the gas turbine blade, it is possible to prevent the occurrence of a defect such as a crack in the build-up welding and enables the highly reliable repairing.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A method for repairing gas turbine blades which repairs a th ickness-reduced portion of a blade tip of a gas turbine blade, the method comprising:
a thickness-reduced portion removing step (S101) of working a surface of the blade tip (10a) into a flat surface (13) by removing the thickness-reduced portion (12) of the blade tip;
a build-up welding step (S102) of forming a built-up portion (14) with a predetermined thickness by melting powder of a build-up material higher in ductility than a base material forming the gas turbine blade (10) by a laser beam and building up the melted powder in multiple layers on the blade tip (10a) whose surface is worked into the flat surface (13);
a forming step (S103) of working the built-up portion (14) into the same shape as a shape that the blade tip (10a) originally has before suffering a thickness loss; and
a heat-treatment step (S 104) of removing a residual strain caused by laser welding in the build-up welding step.

2. A method for repairing gas turbine blades which repairs a thickness-reduced portion of a blade tip of a gas turbine blade, the method comprising:
a thickness-reduced portion removing step (S101) of working a surface (10a) of the blade tip into a flat surface (13) by removing the thickness-reduced portion of the blade tip;
a first build-up welding step (S102A) of forming a first built-up portion (14a) with a predetermined thickness by melting powder of a first build-up material higher in ductility than a base material forming the gas turbine blade (10) by a laser beam and building up the melted powder in multiple layers on the blade tip whose surface is worked into the flat surface;
a second build-up welding step (S102B) of forming a second built-up portion (14b) with a predetermined thickness by melting powder of a second build-up material more excellent in oxidation resistance than the first build-up material by a laser beam and building up the melted powder in multiple layers on the first built-up portion (14a) in a stacked manner;
a forming step (S103) of working the first built-up portion (14a) and the second built-up portion (14b) into the same shape as a shape that the blade tip originally has before suffering a thickness loss; and
a heat-treatment step (S 104) of removing a residual strain caused by laser welding in the first build-up welding step and the second build-up welding step.

3. The method for repairing gas turbine blades according to claim 1,
wherein the build-up material (14) is made of a Ni-base superalloy whose Al content is less than an Al content of a base material forming the gas turbine blade.

4. The method for repairing gas turbine blades according to claim 2,
wherein the first build-up material (14a) is made of a Ni-base superalloy whose Al content is less than an Al content of a base material forming the gas turbine blade.

5. The method for repairing gas turbine blades according to claim 2 or 4,
wherein the second build-up material (14b) is made of one material selected from a group consisting of the same material as the base material forming the gas turbine blade, MCrAlY (M: Co and Ni), and an Al alloy.

6. The method for repairing gas turbine blades according to claim 2, 4 or 5,
wherein a thickness of the second built-up portion (14b) after the forming step is 50 µm to 300 µm.

7. The method for repairing gas turbine blades according to any one of the preceding claims, wherein a coating layer is formed on a blade surface of the gas turbine blade, the method further comprising:
a coating layer removing step of removing the coating layer prior to the thickness-reduced portion removing step; and
a coating step (S 105) of forming a coating layer on the blade surface of the gas turbine blade, after the heat treatment step.

8. A gas turbine blade, being repaired by the method for repairing gas turbine blades according to any one of the preceding claims.
